# EUROPÄISCHE PATENTANMELDUNG

(11) **EP 2 696 096 A2**
(43) Veröffentlichungstag der Anmeldung: **12.02.2014**
(21) Anmeldenummer: 13170360.5
(22) Anmeldetag: 04.06.2013
(51) Int. Cl.: F16F 9/36, F16F 9/06

(54) **Trennkolben**

(30) Priorität: 27.07.2012 DE 102012213272
(71) Anmelder: ZF Friedrichshafen AG, 88038 Friedrichshafen (DE)
(72) Erfinder: Handke, Günther, 97502 Euerbach (DE); Thein, Thomas, 97526 Sennfeld (DE); Asadi, Hassan, 97422 Schweinfurt (DE)

(57) **Zusammenfassung**

Die Erfindung bezieht sich auf einen Trennkolben (9, 9', 9") für hydropneumatische Aggregate, durch den in einem Zylinder (1) ein mit Flüssigkeit gefüllter Zylinderinnenraum von einem gasgefüllten Ausgleichs- oder Federraum abdichtend trennbar ist und der zweiteilig ausgebildet ist sowie eine radial umlaufende Dichtungsnut (23) aufweist, in der eine an der Innenwand des Zylinders (1) dicht anlegbare ringförmige Dichtung (24) angeordnet ist. Dabei ist eines der beiden Trennkolbenteile ein gleitgünstige Eigenschaften aufweisendes, an der Innenwand des Zylinders (1) gleitendes Führungsteil (15) und das andere Trennkolbenteil ein mit dem Führungsteil (15) verbundenes Halteteil (21, 21', 21 "). Das Führungsteil ist (15) ein Stanz-/Biegeteil aus einem Metallblech, das zumindest an seinem an der Innenwand des Zylinders (1) gleitenden Führungsbereich (16) mit einer Laufschicht (17) beschichtet ist.

## Beschreibung

Die Erfindung bezieht sich auf einen Trennkolben für hydropneumatische Aggregate, durch den in einem Zylinder ein mit Flüssigkeit gefüllter Zylinderinnenraum von einem gasgefüllten Ausgleichs- oder Federraum abdichtend trennbar ist und der zweiteilig ausgebildet ist sowie eine radial umlaufende Dichtungsnut aufweist, in der eine an der Innenwand des Zylinders dicht anlegbare ringförmige Dichtung angeordnet ist, wobei eines der beiden Trennkolbenteile ein gleitgünstige Eigenschaften aufweisendes, an der Innenwand des Zylinders gleitendes Führungsteil ist und das andere Trennkolbenteil ein mit dem Führungsteil verbundenes Halteteil ist.

Bei derartigen Trennkolben ist es bekannt Führungsteil und Halteteil als Blechteile herzustellen. Um die Reibungswiderstände beim Gleiten des Trennkolbens im Zylinder möglichst gering zu halten, ist es bekannt die Flächen des Führungsteils, die an der Innenwand des Zylinders entlang gleiten, feinzubearbeiten. Damit ist die Herstellung des Trennkolbens aufwendig und teuer.

Aufgabe der Erfindung ist es daher einen Trennkolben der eingangs genannten Art zu schaffen, der einfach und kostengünstig herstellbar ist und nur geringe Reibwiderstände beim Gleiten in dem Zylinder zu überwinden hat.

Diese Aufgabe wird erfindungsgemäß dadurch gelöst, dass das Führungsteil ein Stanz-/Biegeteil aus einem Metallblech ist, das zumindest an seinem an der Innenwand des Zylinders gleitenden Führungsbereich mit einer Laufschicht beschichtet ist.

Sowohl die Herstellung als Stanz-/Biegeteil als auch die einfache Beschichtung mit der Laufschicht ermöglichen einen kostengünstigen Aufbau bei leichtgängigem Gleiten des Trennkolbens in dem Zylinder.

Der Trennkolben kann z.B. bei Schwingungsdämpfern, Federbeinen, hydraulisch gedämpften Gasfedern, oder zylindrischen Druckspeichern angewandt werden.

Das Führungsteil kann aus Stahl oder Bronze bestehen und die Laufschicht eine Kunststoffschicht sein, wobei das Aufbringen der Kunststoffschicht auf das Führungsteil einfach und kostengünstig ist.

Besteht die Laufschicht aus PTFE (Polytetrafluorethylen) oder enthält PTFE, so kann diese Schicht bereits in rationeller Weise auf das noch nicht umgeformte Metallblech aufgebracht werden um dann mit der Umformung des Führungsteils zwangsläufig mitumgeformt zu werden.

Die Laufschicht kann dabei aus einer Mischung von PTFE (Polytetrafluorethylen) und Pb (Blei) bestehen.

Die aus PTFE bestehende oder PTFE enthaltende Laufschicht weist eine gute Qualität hinsichtlich einer trockenen Selbstschmierung und damit eine geringe Reibung an der Innenwand des Zylinders auf. Weiterhin führt ihre geringe Abnutzung zu guten Dauerhaltbarkeitseigenschaften.

In einfacher Weise kann die Laufschicht auf eine metallische Platine aufgebracht und anschließend durch einen Stanz-/Biegevorgang das Führungsteil geformt sein.

Ist in das Führungsteil ganz oder teilweise die Dichtungsnut eingeformt, so muss diese nicht separat erzeugt werden.

Das Halteteil kann in einfach und kostengünstiger Weise ebenfalls ein Stanz-/Biegeteil aus einem Metallblech sein.

Besteht das Halteteil aus einem Kunststoff, so ergibt sich zusätzlich eine Gewichtsreduzierung. Dabei ist das Halteteil kostengünstig herstellbar, wenn das Halteteil ein Kunststoff-Spritzgussteil ist.

Das Führungsteil oder das Halteteil können eine Aufnahme zum Verbinden mit dem Halteteil oder dem Führungsteil aufweisen.

Dabei sind zur Verbindung dieser Teile keine separaten Verbindungselemente erforderlich, wenn Führungsteil und Halteteil form- und/oder kraftschlüssig miteinander verbindbar sind. Dies vereinfacht und verbilligt auch die Lagerhaltung oder Logistik der Teile des Trennkolbens.

Eine einfache Verbindbarkeit der Teile des Trennkolbens wird dadurch ermöglicht, dass die Aufnahme eine zur Längsachse des Trennkolbens koaxiale, rotationssymmetrische Aufnahmeöffnung des Führungsteils ist, in die ein entsprechender Aufnahmeansatz des Halteteils einsetzbar ist.

Genauso gut ist es möglich, dass die Aufnahme ein zur Längsachse des Trennkolbens koaxialer, rotationssymmetrischer Aufnahmeansatz des Führungsteils ist, in den eine entsprechende Aufnahmeöffnung des Halteteils einsetzbar ist.

Zum Aufrechterhalten der Verbindung von Führungsteil und Halteteil und einfachen Herstellen dieser Verbindung kann der Aufnahmeansatz mit Presspassung in die Aufnahmeöffnung einsetzbar sein.

Um bei der Montage auf einfache Weise die richtige Zusammenbaulage von Führungsteil und Halteteil sicherzustellen, kann der Aufnahmeansatz des Halteteils oder des Führungsteils bis zur Anlage an einem Anschlag des Führungsteils oder des Halteteils in die Aufnahmeöffnung einschiebbar sein.

In das Halteteil kann ganz oder teilweise die Dichtungsnut eingeformt sein. Dabei ist es möglich, dass das Halteteil einen eine Seitenwand der Dichtungsnut bildenden, radial umlaufenden Flansch aufweist.

Ein Ausführungsbeispiel der Erfindung ist in der Zeichnung dargestellt und wird im folgenden näher beschrieben. Es zeigen
- Figur 1: einen Längsschnitt eines Einrohr-Stoßdämpfers
- Figur 2: ein erstes Ausführungsbeispiel eines Trennkolbens des Einrohr-Stoßdämpfers nach Figur 1 im Querschnitt
- Figur 3: ein zweites Ausführungsbeispiel eines Trennkolbens des Einrohr-Stoßdämpfers nach Figur 1 im Querschnitt
- Figur 4: ein drittes Ausführungsbeispiel eines Trennkolbens des Einrohr-Stoßdämpfers nach Figur 1 im Querschnitt.

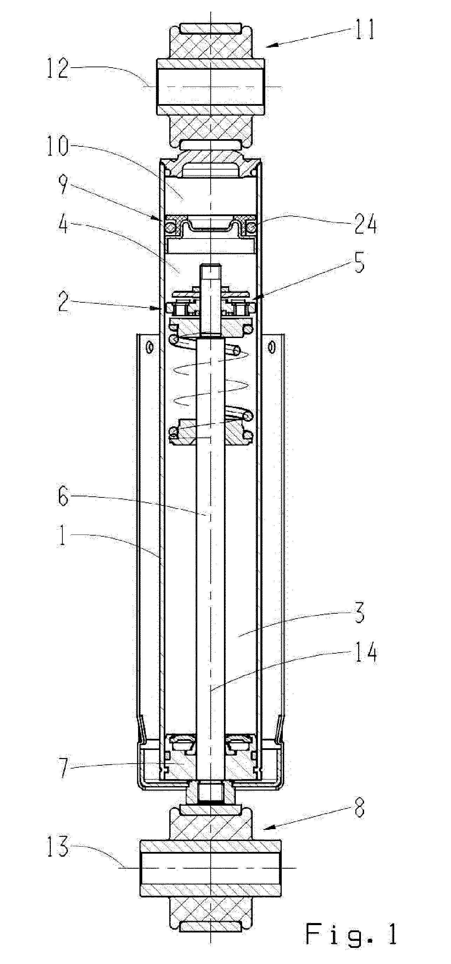

Der in Figur 1 dargestellte hydraulische Einrohr-Stoßdämpfer eines Fahrzeugs weist einen Zylinder 1 auf, in dem ein Dämpfkolben 2 axial verschiebbar geführt ist. Durch den Dämpfkolben 2 wird der Zylinder 1 in eine erste Arbeitskammer 3 und eine zweite Arbeitskammer 4 unterteilt. Beide Arbeitskammern 3 und 4 sind mit einer Dämpfungsflüssigkeit gefüllt.

In dem Dämpfkolben 2 sind Drosselventile 5 angeordnet, durch die bei einer Bewegung des Dämpfkolbens 2 Dämpfungsflüssigkeit von der ersten Arbeitskammer 3 zur zweiten Arbeitskammer 4 und umgekehrt strömen kann.

Der Dämpfkolben weist einseitig eine Kolbenstange 6 auf, die durch die erste Arbeitskammer 3 und durch eine Führungs- und Dichteinheit 7 abgedichtet aus der ersten Arbeitskammer 3 herausgeführt ist. An ihrem aus dem Zylinder 1 herausgeführten freien Ende weist die Kolbenstange 6 ein erstes Gelenkauge 8 auf.

Auf der der Kolbenstange 6 entgegengesetzten Seite des Dämpfkolbens 2 ist in dem Zylinder 1 ein Trennkolben 9 verschiebbar angeordnet, der die zweite Arbeitskammer 4 von einer Ausgleichskammer 10 trennt, die zwischen dem Trennkolben 9 und dem geschlossenen Ende des Zylinders 1 gebildet ist. Die Ausgleichskammer 10 ist mit einem unter Vordruck stehenden Gas gefüllt.

An dem dem ersten Gelenkauge 8 entgegengesetzten geschlossenen Ende des Zylinders 1 ist ein zweites Gelenkauge 11 angeordnet. Die zueinander parallelen Gelenkachsen 12 und 13 der Gelenkaugen 8 und 11 erstrecken sich quer zur Längsachse 14 des Zylinders 1 sowie axial zu einer nicht dargestellten Radachse des Fahrzeugs.

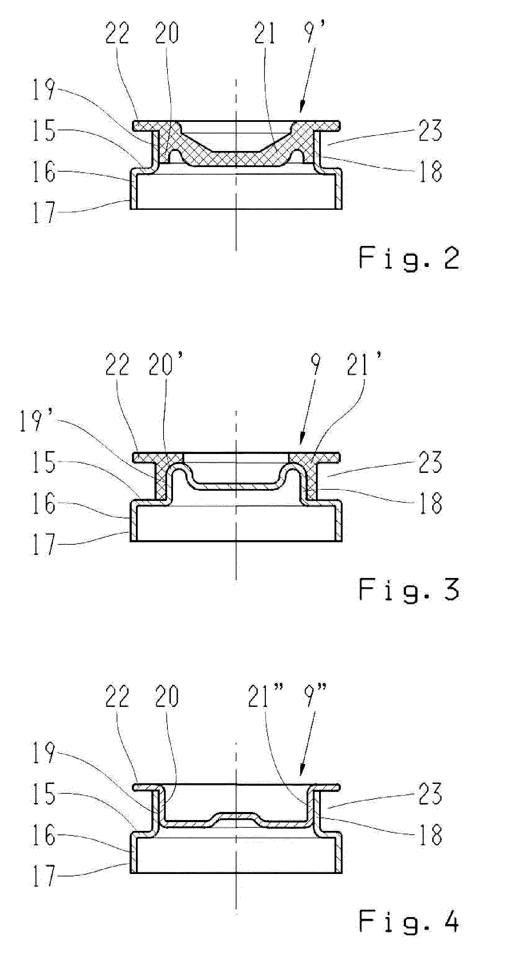

Der in Figur 2 dargestellte Trennkolben 9' weist ein als Stanz-/Biegeteil aus einem Bronzeblech erzeugtes rotationssymmetrisches Führungsteil 15 auf, dessen Führungsbereich 16, mit dem der Trennkolben 9' in dem Zylinder 1 verschiebbar geführt ist, an seiner Außenseite mit einer Laufschicht 17 beschichtet ist, die aus einer Mischung aus PTFE und Pb besteht.

Einseitig axial schließt sich an den Führungsbereich 16 ein rohrartiger Verbindungsbereich 18 geringeren Durchmessers als der Führungsbereich 16 an, dessen Innendurchgang eine Aufnahmeöffnung 19 bildet.

In die Aufnahmeöffnung 19 ist ein entsprechender Aufnahmeansatz 20 eines aus Kunststoff bestehenden Halteteils 21 eingepresst.

Das Halteteil 21 weist an seiner dem Führungsteil 15 abgewandten Seite einen radial umlaufenden Flansch 22 auf, der an dem stirnseitigen Ende des Führungsteils 15 in Anlage ist und eine Seitenwand einer radial umlaufenden Dichtungsnut 23 zur Aufnahme einer ringförmigen Dichtung 24 bildet. Der Boden und die andere Seitenwand der Dichtungsnut 23 werden durch den rohrartigen Verbindungsbereich 18 geringeren Durchmessers des Führungsteils 15 gebildet.

Das Ausführungsbeispiel des Trennkolbens 9 in Figur 3 entspricht dem in Figur 1 gezeigten Trennkolben 9.

Dieser Trennkolben 9 weist ebenfalls ein als Stanz-/Biegeteil aus einem Bronzeblech erzeugtes rotationssymmetrisches Führungsteil 15 auf, dessen Führungsbereich 16, mit dem der Trennkolben 9' in dem Zylinder 1 verschiebbar geführt ist, an seiner Außenseite mit einer Laufschicht 17 beschichtet ist, die aus einer Mischung aus PTFE und Pb besteht.

Einseitig axial schließt sich an den Führungsbereich 16 ein rohrartiger Verbindungsbereich 18 geringeren Durchmessers als der Führungsbereich 16 an, der aber keinen Innendurchgang aufweist sondern geschlossen ist.

Der rohrartige Verbindungsbereich 18 bildet einen rotationssymmetrischen Aufnahmeansatz 20'. Auf die Außenseite des Aufnahmeansatzes 20' ist eine entsprechende Aufnahmeöffnung 19' eines den Aufnahmeansatz 20' umschließenden, rotationssymmetrischen Halteteils 21' aufgepresst. Das Halteteil 21' ist ein Kunststoffteil, das an seinem den Aufnahmeansatz 20' umschließenden Bereich eine äußere zylindrische Mantelfläche besitzt und an seiner dem Führungsteil 15 abgewandten Seite einen radial umlaufenden Flansch 22 aufweist.

Dieser Flansch 22 bildet die eine Seitenwand einer radial umlaufenden Dichtungsnut 23 zur Aufnahme einer ringförmigen Dichtung 24. Der Boden der Dichtungsnut 23 wird durch die äußere zylindrische Mantelfläche des den Aufnahmeansatz 20 umschließenden Bereichs des Halteteils 21' gebildet, während die andere Seitenwand der Dichtungsnut 23 von dem radial von dem Führungsbereich 16 zum Aufnahmeansatz 20' führenden Bereich des Führungsteils 15 gebildet wird.

Der Trennkolben 9" nach Figur 4 weist ein Führungsteil 15 auf, das dem Führungsteil 15 in Figur 2 entspricht. Auch das Halteteil 21 " entspricht in seinem Aufbau dem Halteteil 21 aus Figur 2 mit dem Unterschied, daß es nicht ein Kunststoffteil sondern sondern ein aus einem Metallblech erzeugtes Stanz-/Biegeteil ist.

**Bezugszeichen**

| | |
|---|---|
| 1 | Zylinder |
| 2 | Dämpfkolben |
| 3 | erste Arbeitskammer |
| 4 | zweite Arbeitskammer |
| 5 | Drosselventile |
| 6 | Kolbenstange |
| 7 | Führungs- und Dichtungseinheit |
| 8 | erstes Gelenkauge |
| 9 | Trennkolben |
| 9' | Trennkolben |
| 9" | Trennkolben |
| 10 | Ausgleichskammer |
| 11 | zweites Gelenkauge |
| 12 | Gelenkachse |
| 13 | Gelenkachse |
| 14 | Längsachse |
| 15 | Führungsteil |
| 16 | Führungsbereich |
| 17 | Laufschicht |
| 18 | Verbindungsbereich |
| 19 | Aufnahmeöffnung |
| 19' | Aufnahmeöffnung |
| 20 | Aufnahmeansatz |
| 20' | Aufnahmeansatz |
| 21 | Halteteil |
| 21' | Halteteil |
| 21 " | Halteteil |
| 22 | Flansch |
| 23 | Dichtungsnut |
| 24 | Dichtung |

## Patentansprüche

1. Trennkolben für hydropneumatische Aggregate, durch den in einem Zylinder ein mit Flüssigkeit gefüllter Zylinderinnenraum von einem gasgefüllten Ausgleichs- oder Federraum abdichtend trennbar ist und der zweiteilig ausgebildet ist sowie eine radial umlaufende Dichtungsnut aufweist, in der eine an der Innenwand des Zylinders dicht anlegbare ringförmige Dichtung angeordnet ist, wobei eines der beiden Trennkolbenteile ein gleitgünstige Eigenschaften aufweisendes, an der Innenwand des Zylinders gleitendes Führungsteil ist und das andere Trennkolbenteil ein mit dem Führungsteil verbundenes Halteteil ist, **dadurch gekennzeichnet, daß** das Führungsteil (15) ein Stanz-/Biegeteil aus einem Metallblech ist, das zumindest an seinem an der Innenwand des Zylinders (1) gleitenden Führungsbereich (16) mit einer Laufschicht (17) beschichtet ist.

2. Trennkolben nach Anspruch 1, **dadurch gekennzeichnet, daß** das Führungsteil (15) aus Stahl oder Bronze besteht.

3. Trennkolben nach einem der vorhergehenden Ansprüche, **dadurch gekennzeichnet, daß** die Laufschicht (17) aus PTFE (Polytetrafluorethylen) besteht oder PTFE enthält.

4. Trennkolben nach einem der vorhergehenden Ansprüche, **dadurch gekennzeichnet, daß** in das Führungsteil (15) ganz oder teilweise die Dichtungsnut (23) eingeformt ist.

5. Trennkolben nach einem der vorhergehenden Ansprüche, **dadurch gekennzeichnet, daß** das Halteteil (21 ") ein Stanz-/Biegeteil aus einem Metallblech ist.

6. Trennkolben nach einem der Ansprüche 1 bis 4, **dadurch gekennzeichnet, daß** das Halteteil (21, 21') aus einem Kunststoff besteht.

7. Trennkolben nach einem der vorhergehenden Ansprüche, **dadurch gekennzeichnet, daß** das Führungsteil (15) oder das Halteteil (21, 21', 21 ") eine Aufnahme zum Verbinden mit dem Halteteil (21, 21', 21 ") oder dem Führungsteil (15) aufweist.

8. Trennkolben nach Anspruch 7, **dadurch gekennzeichnet, daß** Führungsteil (15) und Halteteil (21, 21', 21 ") form- und/oder kraftschlüssig miteinander verbindbar sind.

9. Trennkolben nach Anspruch 8, **dadurch gekennzeichnet, daß** die Aufnahme eine zur Längsachse (14) des Trennkolbens (9, 9', 9") koaxiale, rotationssymmetrische Aufnahmeöffnung (19) des Führungsteils (15) ist, in die ein entsprechender Aufnahmeansatz (20) des Halteteils (21, 21 ") einsetzbar ist.

10. Trennkolben nach Anspruch 8, **dadurch gekennzeichnet, daß** die Aufnahme ein zur Längsachse (14) des Trennkolbens (9') koaxialer, rotationssymmetrischer Aufnahmeansatz (20') des Führungsteils (15) ist, in den eine entsprechende Aufnahmeöffnung (19') des Halteteils (21') einsetzbar ist.

11. Trennkolben nach einem der Ansprüche 9 und 10, **dadurch gekennzeichnet, daß** der Aufnahmeansatz (20, 20') mit Preßpassung in die Aufnahmeöffnung (19, 19') einsetzbar ist.
